# EUROPÄISCHE PATENTSCHRIFT

(11) **EP 0 930 409 B1**
(45) Veröffentlichungstag und Bekanntmachung des Hinweises auf die Patenterteilung: **24.03.2004**
(21) Anmeldenummer: 99100617.2
(22) Anmeldetag: 14.01.1999
(51) Int. Cl.: E05B 49/00

(54) **Empfangseinrichtung eines Fernbedienungssystems und Verfahren zum Betreiben eines Fernbedienungssystems**
Receiving device for a remote control system and method of operating a remote control system
Dispositif de réception pour un système de commande à distance et procédé d'actionnement d'un système de commande à distance

(30) Priorität: 20.01.1998 DE 19801885
(43) Veröffentlichungstag der Anmeldung: 21.07.1999
(73) Patentinhaber: Siemens Aktiengesellschaft, 80333 München (DE)
(72) Erfinder: Lässle, Hans-Peter, 61250 Usingen (DE); Schmid, Dietmar, 65606 Villmar (DE)

(56) Entgegenhaltungen:
- EP-A- 0 524 424
- EP-A- 0 629 758
- WO-A-92/11431
- US-A- 5 420 568

## Beschreibung

Die Erfindung betrifft eine Empfangseinrichtung eines Fernbedienungssystems, insbesondere für das Schließsystem eines Kraftfahrzeuges, nach dem Oberbegriff des Anspruchs 1 sowie ein Verfahren zum Betreiben eines Fernbedienungssystems.

Aus der DE-OS 33 41 900 ist ein Fernbedienungssystem zur Ver- und Entriegelung von Sicherheitsanlagen in Fahrzeugen bekannt. Das Fernbedienungssystem besteht aus einem Empfangsgerät, das im Fahrzeug untergebracht ist, und einem Signalsender mit eigener Energieversorgung. Durch Betätigen des Signalsenders werden von diesem kodierte Signale in Richtung des Empfangsgerätes ausgesendet. Das Empfangsgerät empfängt die Signale, vergleicht sie mit einem abgespeicherten Muster und betätigt bei Übereinstimmung der Signalmuster eine Sicherheitsanlage. Nach der DE-OS 33 41 900 sollen die von dem Signalsender erzeugten Signale mit veränderbarer Sendeenergie ausgesendet werden. Durch eine Steigerung der Sendeenergie mit zunehmender Betätigungsdauer soll einerseits erreicht werden, daß ein Betätigen der Sicherheitsanlage mit der bei gegebenem Abstand zwischen Fahrzeug und Sender geringstmöglichen Sendeenergie erfolgt, um ein Abhören des Sendesignals durch Fremdpersonen zu erschweren. Gleichzeitig soll hierdurch die Batterie möglichst wenig beansprucht werden. Andererseits soll durch die mit zunehmender Betätigungsdauer des Senders steigende Sendeleistung erreicht werden, daß auch unter schwierigen Empfangsbedingungen, wie z. B. vereiste Scheiben, noch eine Funktion des Fernbedienungssystems sichergestellt ist.

In der EP-0629758-A1 wird eine Fernbedienungseinrichtung zur Auslösung verschiedener Funktionen in einem Kraftfahrzeug offenbart, wobei unterschiedlichen Funktionen unterschiedliche Empfangsreichweiten zugeordnet sind. Im Ruhezustand ist der Empfänger auf maximale Reichweite eingestellt, das heißt seine Ansprechschwelle ist gering. Wird ein Signal empfangen, so wird je nach dem Inhalt des ersten Teils dieses Signals die Reichweite durch Erhöhung der Ansprechschwelle reduziert, um dann den zweiten, die eigentliche Funktion auslösenden Teil des Signals zu empfangen und auszuwerten.

Aus der WO-9211431-A1 geht ein fernsteuerbares Fahrzeugschließsystem hervor, bei welchem zur Gewährleistung einer gleichbleibenden Reichweite die Empfindlichkeit des Empfängers oder die Sendeleistung des Senders kontinuierlich nachjustiert werden.

Aus der US-5420568 ist des Weiteren ein drahtloses Fahrzeugschließsystem bekannt, bei welchem die Ansprechschwelle des Empfängers von außen mittels eines Schalters geändert werden kann. Diese Ansprechschwelle definiert die Reichweite, innerhalb derer ein Entriegeln des Fahrzeugs zugelassen ist. Ein Verriegeln wird über die gesamte Reichweite ausgeführt. Die Ansprechschwelle wird während des Betriebes der Fernbedienung nicht automatisch verändert.

In modernen Schließsystemen mit Fernbedienungssystem ist die Sendeeinrichtung in der Regel im Fahrzeugschlüssel untergebracht. Die Empfangseinrichtung beinhaltet zumeist eine intelligente Elektronik, die in der Lage ist, mehrere Aktoren anzusteuern. Eine solche Empfangseinrichtung überwacht, steuert und regelt dabei so vielfältige Funktionen wie die Zentralverriegelung der Türen, die Diebstahlwarnanlage, die Innenraumbeleuchtung, die Fensterheber und das Schiebedach. Insbesondere bei den Komfortfunktionen Schließen der Fenster und des Schiebedachs ist es aus Sicherheitsgründen (z. B. Einklemmschutz) unerlässlich, dass die Funktion nur solange ausgeführt wird, wie ein Eingangssignal an der Empfangseinrichtung anliegt. Die Empfangseinrichtung kann jedoch nicht erkennen, aus welchen Gründen keine Signale mehr anliegen. Dies kann vom Bediener gewollt sein, es kann jedoch auch aufgrund eines zu geringen Signalpegels auftreten. Letzteres tritt z. B. dann ein, wenn der Bediener sich zu weit vom Empfänger entfernt oder wenn die Funktion an der Reichweitengrenze ausgelöst wird und durch Bewegen der Sendeeinrichtung die Feldstärke an der Empfangseinrichtung unter die Ansprechschwelle absinkt. Dies führt dazu, dass die eingeleitete Funktion (z. B. Schließen der Fenster) unterbrochen wird oder ganz abbricht. Hier setzt nun die Erfindung an, deren Ziel es ist, eine Empfangseinrichtung und ein Verfahren anzugeben, die es erlauben, die genannten Mängel abzustellen.

Bei der erfindungsgemäßen Empfangseinrichtung wird dies durch Mittel zur Veränderung der Ansprechschwelle der Empfangseinrichtung erreicht, welche nach dem Detektieren eines Signals oberhalb der Ansprechschwelle die Ansprechschwelle erniedrigen und nach dem Ausbleiben des Signals wieder erhöhen.

Nach dem erfindungsgemäßen Verfahren sind folgende Verfahrensschritte vorgesehen:
- Reduzieren der Ansprechschwelle der Empfangseinrichtung, nachdem ein Signal der Sendeeinrichtung detektiert wird und
- Erhöhen der Ansprechschwelle der Empfangseinrichtung nach Ausbleiben eines Signals.

Durch die erfindungsgemäße Empfangseinrichtung bzw. das erfindungsgemäße Verfahren wird erreicht, dass eine Komfortfunktion wie das Schließen der Fenster oder des Schiebedaches auch dann noch aufrechterhalten wird, wenn sich der Signalpegel durch Bewegen der Sendeeinrichtung oder Vergrößerung des Abstandes zwischen Sende- und Empfangseinrichtung verringert. Ein stockender oder ungleichmäßiger Betrieb durch sinkende Signalpegel wird weitgehend ausgeschlossen, da abnehmende Signalpegel durch eine reduzierte Ansprechschwelle der Empfangseinrichtung über einen weiten Bereich kompensiert werden.

Vorteilhafte Ausgestaltungen der Erfindung sind in den Unteransprüchen dargelegt. Die Veränderung der Ansprechschwelle der Empfangseinrichtung kann in Form einer Umschaltung über ein durch ein Steuersignal veränderbares Dämpfungs- oder Verstärkungsglied erfolgen. Gemäß einer weiteren Ausführungsform ist zur Veränderung der Ansprechschwelle ein Komparator zum Vergleich des Pegels des empfangenen Signals mit einem Vorgabewert vorgesehen. Das Steuersignal für das Dämpfungs- oder Verstärkungsglied bzw. der Vorgabewert für den Komparator wird zweckmäßigerweise durch einen in der Empfangseinrichtung enthaltenen Mikroprozessor bereitgestellt. Bei der Empfangseinrichtung kann es sich insbesondere um eine Funkempfangseinrichtung oder auch eine Infrarotempfangseinrichtung handeln.

Die Erfindung wird nachfolgend anhand der Abbildungen näher erläuert.
Es zeigen:
Fig.1 die Darstellung der Hysterese der Ansprechschwelle der Empfangseinrichtung,
Fig. 2 ein Ablaufdiagramm der Steuerung
Fig. 3. die Prinzipdarstellung eines Fernbedienungssystems im Kraftfahrzeug
Fig. 4 eine Ausführungsform der Empfangseinrichtung mit Dämpfungsglied zur Umschaltung der Ansprechschwelle

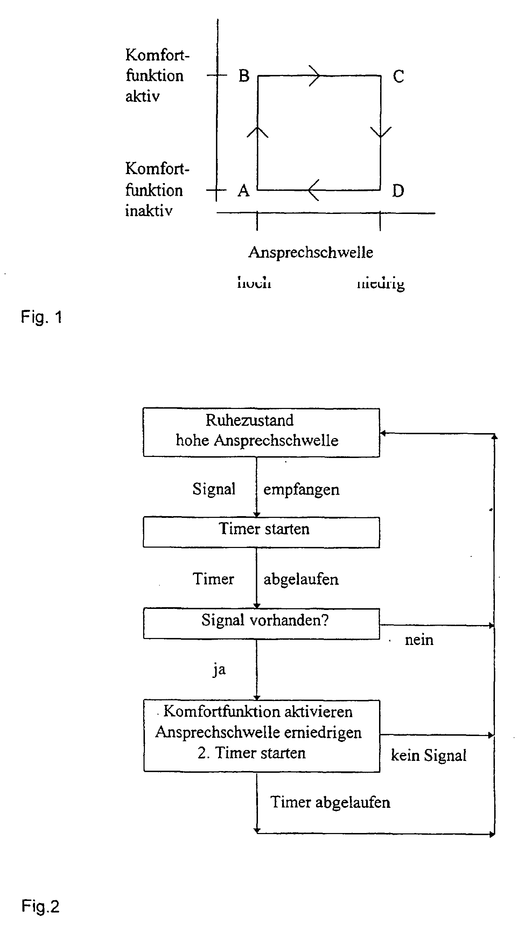

In Figur 1 ist die Hysterese der Ansprechschwelle der Empfangseinrichtung für eine Komfortfunktion wie Schließen der Fenster oder des Schiebedaches dargestellt. Zum Einschalten der Komfortfunktion ist es erforderlich, daß die von der Empfangseinrichtung empfangenen Signale oberhalb einer ersten höheren Ansprechschwelle liegen. Dies ist gleichbedeutet mit einer geringen Empfindlichkeit der Empfangseinrichtung bzw. mit einer verringerten Reichweite der Sendeeinrichtung. Das System ist inaktiv (Zustand A, Ruhezustand). Wird mit dieser erhöhten Ansprechschwelle das von der Sendeeinrichtung kommende Signal als richtig erkannt, so wird die Komfortfunktion aktiviert (Zustand B). Zudem wird nun die Ansprechschwelle erniedrigt (Zustand C, Empfindlichkeit bzw. Reichweite erhöht), so daß auch bei geringer werdendem Signalpegel durch Bewegung des Bedieners und dergleichen die Komfortfunktion ohne Störung ausgeführt wird. Nicht zuletzt aus Sicherheitsgründen ist die Komfortfunktion nur solange aktiviert, solange der Bediener die Sendeeinrichtung aktiviert hat, d.h. solange die entsprechende Taste gedrückt ist. Wird die Sendeeinrichtung deaktiviert (Loslassen der Taste), so verharrt die Komfortfunktion in der erreichten Stellung und wird deaktiviert (Zustand D). Die Ansprechschwelle wird wieder erhöht (Zustand A, Ausgangszustand).

Abweichend davon ist es selbstverständlich möglich, daß die Aktivierung / Deaktivierung der Komfortfunktion und die Umschaltung der Ansprechschwelle gleichzeitig oder in veränderter Reihenfolge durchgeführt werden. Beispielsweise können ausgehend vom Ruhezustand nach dem Dektektieren eines Signals oberhalb der Ansprechschwelle gleichzeitig die Komfortfunktion aktiviert und die Ansprechschwelle erniedrigt werden. Ausgehend von demselben Ruhezustand ist es auch möglich, nach dem Detektieren eines Signals oberhalb der Ansprechschwelle zunächst die Ansprechschwelle zu erniedrigen und dann die Komfortfunktion zu aktivieren (Umkehrung der Richtung in Fig.1).

In einer besonderen Ausführungsform, deren Ablaufdiagramm in Fig. 2 dargestellt ist, ist vorgesehen, daß nach Detektieren eines Signals oberhalb der Ansprechschwelle der Empfangseinrichtung zunächst ein Timer gestartet wird. Liegt nach Ablauf des Timers das Signal noch an, so wird die Komfortfunktion aktiviert und die Ansprechschwelle der Empfangseinrichtung wie beschrieben geändert. Mit Aktivierung der Komfortfunktion kann erneut ein Timer gestartet werden, nach dessen Ablauf die Komfortfunktion beendet wird, unabhängig davon, ob das Eingangssignal weiter anliegt. Die Laufzeit dieses zweiten Timers wird dabei so ausreichend groß gewählt, daß die Komfortfunktion abgeschlossen werden kann. Die Komfortfunktion wird jedoch in jedem Fall unterbrochen, wenn an der Empfangseinrichtung kein Signal mehr anliegt.

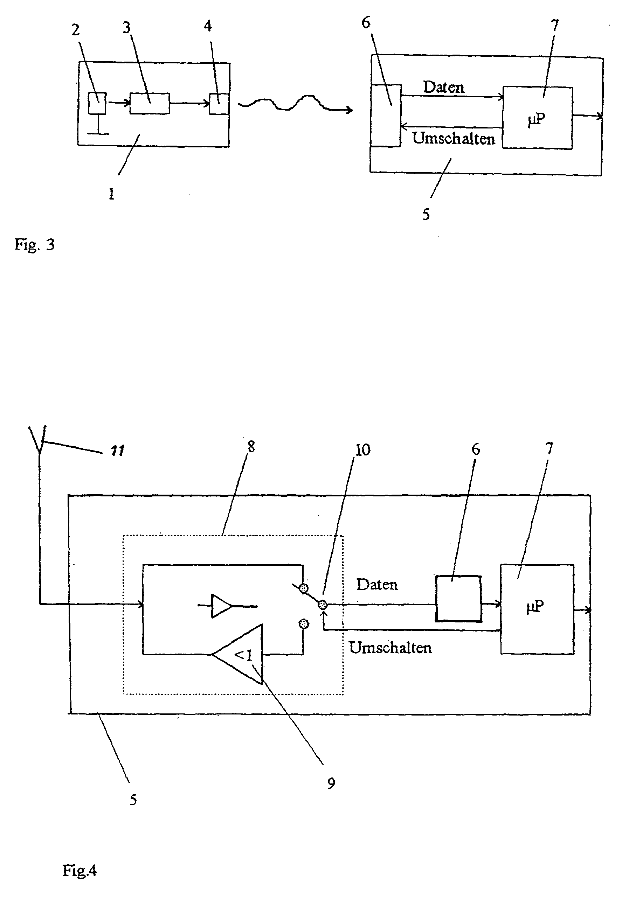

In Fig. 3 ist ein komplettes Fernbedienungssystem für Kraftfahrzeuge im Prinzip dargestellt. Es enthält eine Sendeeinrichtung 1, die üblicherweise in den Schlüsselkopf integriert ist. Die Sendeeinrichtung 1 beinhaltet eine Energieversorgung in Form einer Batterie 2, den Codeerzeuger 3 und Sender 4. Die Empfangseinrichtung 5 beinhaltet neben dem Empfänger 6 einen Mikroprozessor 7. Vom Sender 4 werden nach Betätigen einer (nicht dargestellten) Taste Signale ausgesandt, die vom Empfänger 6 dektektiert und an den Mikroprozessor 7 weitergeleitet werden. Die Signale werden im Mikroprozessor weiterverarbeitet. Abhängig vom Verarbeitungsergebnis werden gegebenfalls vom Mikroprozessor verschiedene Aktoren angesteuert. Hierbei evtl. erforderliche weitere Elektronikkomponenten wie Verstärkerstufen gehören zum Stand der Technik und sind dem Fachmann geläufig.

Ein Ausführungsbeispiel für die erfindungsgemäß vorgesehene Umschaltung der Ansprechschwelle der Empfangseinrichtung 5 ist in Fig. 4 dargestellt. Hierzu ist vor Empfänger 6 und Mikroprozessor 7 eine Umschalteinrichtung 8 mit einem Dämpfungsglied 9 vorgesehen. Das Dämpfungsglied 9 wird über einen Schalter 10, der vom Mikroprozessor 7 angesteuert wird, im Ruhezustand des Fernbedienungssystems zwischen Antenne 11 und Empfänger 6 geschaltet und setzt somit die Ansprechschwelle der Empfangseinrichtung 5 herauf.

Alternativ dazu ist es auch möglich, die Ansprechschwelle durch einen zwischen Antenne 11 und Empfänger 6 geschalteten Verstärker anstelle des Dämpfungsglieds 9 zu verändern. Der Verstärker wird dann erst im aktiven Zustand der Komfortfunktion zugeschaltet, um die Ansprechschwelle zu erniedrigen. Anstelle eines zuschaltbaren Verstärkers oder Dämpfungsglieds ist auch ein Verstärker oder ein Dämpfungsglied mit direkt steuerbarer Verstärkung bzw. Dämpfung möglich.

In einer weiteren Ausführungsform ist in der Empfangseinrichtung ein Komparator vorgesehen, der den Pegel des Eingangssignals mit einem Vorgabewert vergleicht. Liegt der Pegel des Eingangssignals oder eines davon abgeleiteten Signals über dem Vorgabewert, wird die Komfortfunktion aktiviert und die Ansprechschwelle durch einen geringeren Vorgabewert des Komparators herabgesetzt. Der Komparator kann sowohl in den Empfänger 6 als auch in den Mikroprozessor 7 integriert sein. Jedoch ist auch ein separater Komparator zwischen Empfänger 6 und Mikroprozessor 7 möglich. Der jeweilige Vorgabewert für den Komperator wird abhängig vom Betriebszustand der Empfangseinrichtung zweckmäßigerweise vom Mikroprozessor 7 vorgegeben.

## Patentansprüche

1. Empfangseinrichtung (5) eines Fernbedienungssystems, insbesondere für das Schließsystem eines Kraftfahrzeuges, die zum Empfang von Signalen einer zugeordneten Sendeeinrichtung (1) ausgelegt ist und bei anstehenden Signalpegeln oberhalb ihrer Ansprechschwelle einen oder mehrere Aktoren ansteuert und die des Weiteren Mittel zur Veränderung der Ansprechschwelle der Empfangseinrichtung (5)enthält, **dadurch gekennzeichnet, dass** die Mittel zur Veränderung der Ansprechschwelle nach dem Detektieren eines Signals die Ansprechschwelle erniedrigen und nach dem Ausbleiben des Signals die Ansprechschwelle wieder erhöhen.

2. Empfangseinrichtung (5) nach Anspruch 1, **dadurch gekennzeichnet, daß** die Empfangseinrichtung zur Veränderung der Ansprechschwelle ein über ein Steuersignal veränderbares Dämpfungs- (9) oder Verstärkungsglied enthält.

3. Empfangseinrichtung (5) nach Anspruch 1, **dadurch gekennzeichnet, daß** die Empfangseinrichtung einen Komparator zum Vergleich des Pegels des empfangenen Signals oder eines daraus abgeleiteten Signals mit einem Vorgabewert enthält.

4. Empfangseinrichtung (5) nach einem der vorhergehenden Ansprüche, **gekennzeichnet durch** Mittel zur zeitversetzten Veränderung der Ansprechschwelle nach dem Detektieren des Signals.

5. Empfangseinrichtung (5) nach einem der vorhergehenden Ansprüche, **dadurch gekennzeichnet, daß** es sich um eine Funkempfangseinrichtung handelt.

6. Empfangseinrichtung (5) nach einem der vorhergehenden Ansprüche, **dadurch gekennzeichnet, daß** die Empfangseinrichtung neben einer Schließeinrichtung für Türen auch eine Schließeinrichtung für Fenster und / oder Schiebedach betätigt.

7. Empfangseinrichtung (5) nach einem der vorhergehenden Ansprüche, **dadurch gekennzeichnet, daß** sie neben dem eigentlichen Signalempfänger einen Mikroprozessor (7) enthält und ein Ausgangssignal für einen oder mehrere Aktoren liefert, solange ein Signal oberhalb der Ansprechschwelle detektiert wird.

8. Verfahren zum Betreiben eines Fernbedienungssystems, insbesondere für Kraftfahrzeuge, bestehend aus einer Sendeeinrichtung (1) sowie einer Empfangseinrichtung (5) mit umschaltbarer Ansprechschwelle, das die Verfahrensschritte
- Reduzieren der Ansprechschwelle der Empfangseinrichtung (5), nachdem ein Signal der Sendeeinrichtung (1) detektiert wird und
- Erhöhen der Ansprechschwelle der Empfangseinrichtung (5) nach Ausbleiben eines Signals enthält.

9. Verfahren nach Anspruch 8, **dadurch gekennzeichnet, daß** die Reduzierung der Ansprechschwelle der Empfangseinrichtung (5) zeitverzögert nach dem Detektieren des Signals erfolgt.

## Claims

1. Receiver (5) of a remote control system, in particular for the closing system of a motor vehicle, which is designed to receive signals of an associated transmitter (1), and drives one or more actuators when signal levels above its response threshold are present, and which furthermore comprises means for changing the response threshold of the receiver (5) **characterized in that** the means for changing the response threshold reduce the response threshold after the detection of a signal and increase it again when no signal is present.

2. Receiver (5) according to Claim 1, **characterized in that**, in order to change the response threshold, the receiver contains an attenuator (9) or amplification element which can be varied by means of a control signal.

3. Receiver (5) according to Claim 1, **characterized in that** the receiver contains a comparator for comparing the level of the received signal or of a signal derived therefrom with a setpoint value.

4. Receiver (5) according to one of the preceding claims, **characterized by** means for changing, with staggered timing, the response threshold after the detection of the signal.

5. Receiver (5) according to one of the preceding claims, **characterized in that** it is a radio receiver.

6. Receiver (5) according to one of the preceding claims, **characterized in that** the receiver activates not only a closing device for doors but also a closing device for windows and/or a sunroof.

7. Receiver (5) according to one of the preceding claims, **characterized in that** it contains not only the actual signal reception device but also a microprocessor (7), and supplies an output signal for one or more actuators as long as a signal is detected above the response threshold.

8. Method for operating a remote control system, in particular for motor vehicles, comprising a transmitter (1) and a receiver (5) with a response threshold which can be switched over, said method including the method steps
- reduction of the response threshold of the receiver (5) after a signal of the transmitter (1) is detected, and
- increasing the response threshold of the receiver (5) after a signal fails to occur.

9. Method according to Claim 8, **characterized in that** the reduction of the response threshold of the receiver (5) takes place with a time delay after the detection of the signal.

## Revendications

1. Dispositif de réception (5) d'un système de commande à distance, en particulier pour le système de fermeture d'un véhicule automobile, qui est conçu pour la réception de signaux d'un dispositif d'émission (1) associé et qui, lorsque les niveaux des signaux appliqués sont situés au-dessus de son seuil de réaction, commande un ou plusieurs actionneurs, et qui contient par ailleurs des moyens de modification du seuil de réaction du dispositif de réception (5), **caractérisé en ce que** les moyens de modification du seuil de réaction abaissent le niveau de réaction après la détection d'un signal et augmentent de nouveau le seuil de réaction en cas de disparition du signal.

2. Dispositif de réception (5) selon la revendication 1, **caractérisé en ce que** pour modifier le seuil de réaction, le dispositif de réception contient un organe d'atténuation (9) ou d'amplification qui peut être modifié par un signal de commande.

3. Dispositif de réception (5) selon la revendication 1, **caractérisé en ce que** le dispositif de réception contient un comparateur qui compare le niveau du signal reçu ou d'un signal qui en est dérivé à une valeur prédéterminée.

4. Dispositif de réception (5) selon l'une des revendications précédentes, **caractérisé par** des moyens de modification décalée dans le temps du seuil de réception après la détection du signal.

5. Dispositif de réception (5) selon l'une des revendications précédentes, **caractérisé en ce qu'**il s'agit d'un dispositif de réception radio.

6. Dispositif de réception (5) selon l'une des revendications précédentes, **caractérisé en ce qu'**en plus d'un dispositif de fermeture des portes, le dispositif de réception actionne également un dispositif de fermeture des fenêtres et/ou d'un toit ouvrant.

7. Dispositif de réception (5) selon l'une des revendications précédentes, **caractérisé en ce qu'**en plus du récepteur de signaux proprement dit, il contient un microprocesseur (7) qui délivre un signal de sortie pour un ou plusieurs actionneurs tant qu'un signal situé au-dessus du seuil de réaction est détecté.

8. Procédé pour l'actionnement d'un système de commande à distance, en particulier pour des véhicules automobiles, constitué d'un dispositif d'émission (1) ainsi que d'un dispositif de réception (5) à seuil de réaction commutable, qui contient les étapes de procédé suivantes:
- abaissement du seuil de réaction du dispositif de réception (5) après qu'un signal du dispositif d'émission (1) a été détecté et
- relèvement du seuil de réaction du dispositif de réception (5) après disparition d'un signal.

9. Procédé selon la revendication 8, **caractérisé en ce que** la réduction du seuil de réaction du dispositif de réception (5) après la détection du signal s'effectue après une temporisation.
